# EUROPEAN PATENT SPECIFICATION

(11) **EP 2 249 593 B1**
(45) Date of publication and mention of the grant of the patent: **02.01.2013**
(21) Application number: 09159359.0
(22) Date of filing: 04.05.2009
(51) Int. Cl.: H04W 12/04, H04W 12/06, H04L 29/06, H04L 9/08, H04L 9/32

(54) **Method and apparatus for authenticating a mobile device**
Verfahren und System zur Authentifizierung einer mobilen Vorrichtung
Procédé et dispositif pour authentifier un dispositif mobile

(43) Date of publication of application: 10.11.2010
(73) Proprietor: NTT DoCoMo, Inc., Tokyo (JP)
(72) Inventor: Zugenmaier, Alf, 81241, München (DE); Laganier, Julien, 81543, München (DE)
(74) Representative: Betten & Resch

(56) References cited:
- WO-A-2008/046915
- 3GPP: "3rd Generation Partnership Project;Technical Specification Group Services and System Aspects; Rationale and track of security decisions in Long Term Evolved (LTE) RAN / 3GPP System Architecture Evolution (SAE) (Release 8)" 3GPP DRAFT; 33821-200-TR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Florence; 20090119, 1 March 2009 (2009-03-01), XP050335030 [retrieved on 2009-03-01]
- 3GPP: "3rd Generation Partnership Project;Technical Specification Group Services and System Aspects; 3G Security;Security architecture(Release 8)" 3GPP DRAFT; 33102-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Vancouver, 8 June 2008 (2008-06-08), XP050280755

## Description

### FIELD OF INVENTION

The present invention relates to a method and an apparatus for authenticating a mobile device.

### BACKGROUND ART

Network providers offer services via a variety of access network technologies. With technology evolution, the level of security provided by a given network access technology can improve. One example of such improvement is that of the 3GPP Long Term Evolution (LTE) also known as E-UTRAN, where the cryptographic keys used for network access authentication are bound to the visited network ID, while the UMTS keys are not.

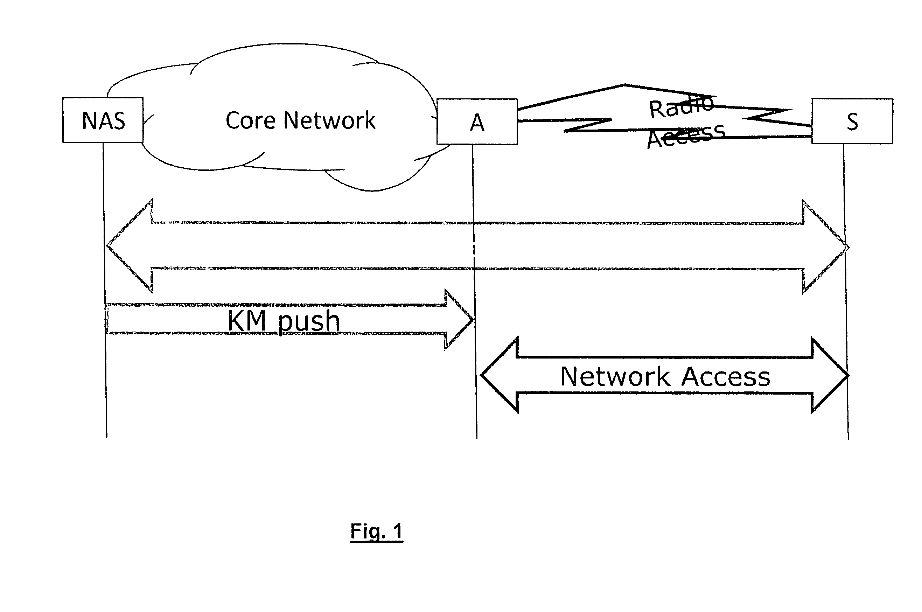

The most widely deployed network access authentication paradigm is the so called three party network access authentication. In this paradigm, the network access is protected by an authenticator (A), and an authentication protocol is executed between a network authentication server (NAS) and the supplicant (S) (which can be any mobile device or terminal) via the authenticator. Such an authentication scheme is schematically illustrated in Fig. 1. The authenticator A protects the access to the network. The network authentication server NAS and the supplicant S share a long term key K. An authentication protocol which is executed between NAS and S, and after successful execution of the authentication protocol by NAS and S, both are in possession of shared keying material. The keying material is then pushed by the NAS to the authenticator A. When that step is accomplished, the supplicant S is able to prove to the authenticator A that it has been authenticated and authorized to access the network. Typical examples of such tripartite network access authentication protocols are the EAP (Extensible Authentication Protocol) protocol from the Internet Engineering Task Force (IETF), and the AKA (Authentication & Key Exchange) protocol from the 3^{rd} Generation Partnership Project (3GPP).

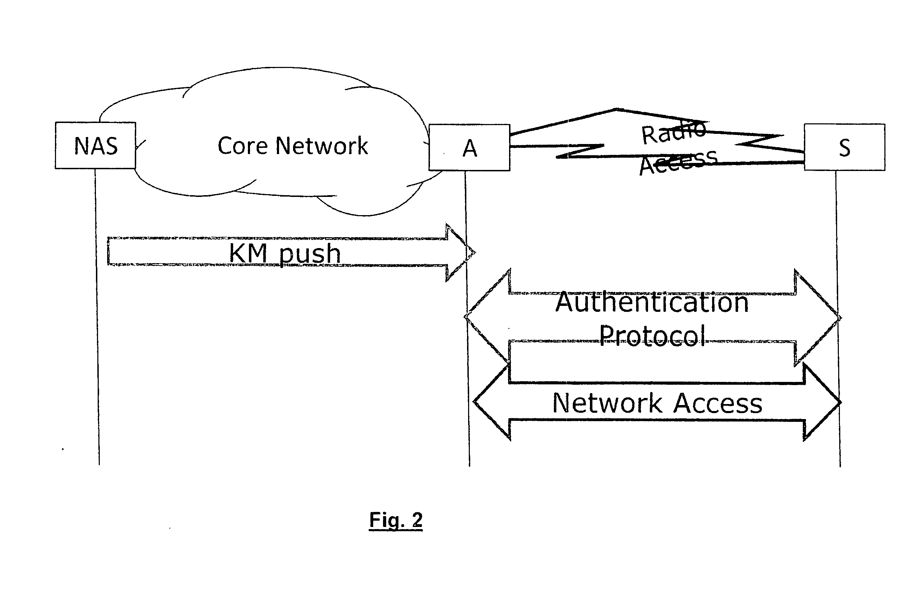

A modification of this approach which is used in 3GPP systems is illustrated in Fig. 2. In the case of 3GPP Authentication & Key Exchange AKA, the keys that will be used between S (user equipment UE in 3GPP) and A (mobile management entity MME in this case) are precomputed by the NAS (i.e. Home Subscriber Server HSS/ Authentication Center AuC) and handed to A. The authentication protocol can then run between S and A only.

While this paradigm provides adequate protection to network access providers, another paradigm that must be taken into account is that of roaming. In roaming, the subscriber who has subscription with a so called home network gains network access via a so called visited network. The home and visited network usually belong to different organizations.

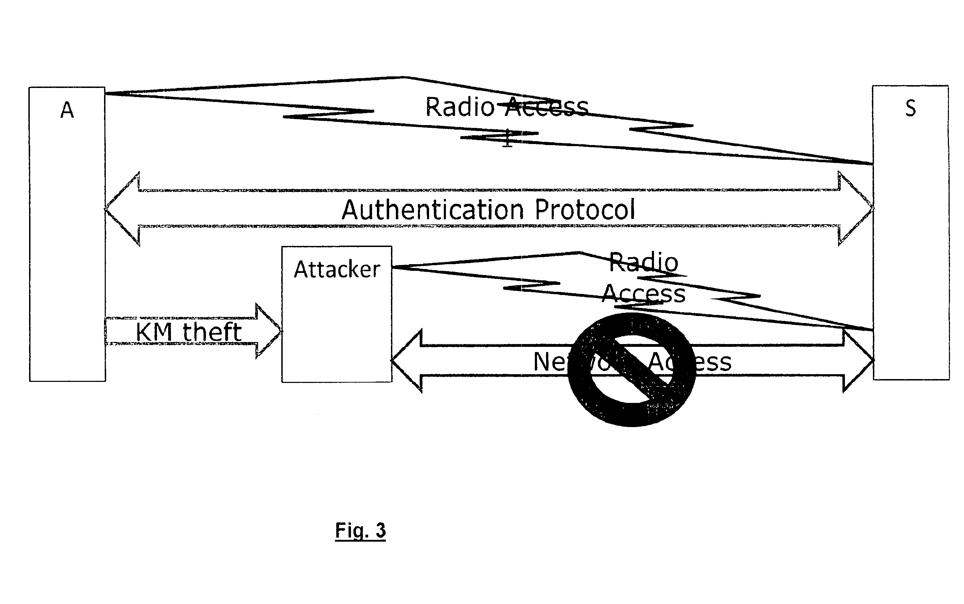

A problem which could arise in such situations is schematically illustrated in Fig. 3. An attacker could steal keying material KM from the authenticator A and could then masquerade pretending he provides network access.

To avoid attacks in which keys stolen in a given visited network are reused in a different visited network, one method is to bind the keys to the visited network ID, as is the case in Long Term Evolution (LTE) systems. If the keying material KM is bound to the network ID, an attacker can only masquerade that network ID as is the case for 3GPP LTE systems. Unfortunately that is not the case with all access network technologies, such as UMTS. Therefore without such a network ID binding an attacker can masquerade any network.

It would be preferable if the network ID binding could be generally executed in order to improve security. However, in certain situations it may not be possible to update the fundamental key derivation procedure that takes place in the supplicant. This is the case, e.g. in 3GPP, where the fundamental key derivation as well as network challenge authentication underlying AKA take place in the USIM (Universal Subscriber Identification Module, the smartcard in 3GPP systems) which is expensive to replace.

It would be desirable to provide a mechanism which benefits from improved security provided by visited network identity binding - in access technologies that offer this binding - while the keys have to be bound to the access technology in a secure and backward compatible manner which does not make it necessary to replace the USIM in legacy systems.

One approach could be to provide some signalling which access technology the key is bound to in one of the protected information elements inside the authentication protocol (e.g., the random challenge RAND or the authentication management field AMF for AKA). Such an approach, however, is not backward compatible.

Sometimes network providers decide to add additional types of access networks. Sometimes they decide to increase the level of security provided by the new network access. This has happened with LTE. LTE keys are bound to the visited network ID, while UMTS keys are not. To avoid attacks in which keys stolen in an UMTS network are reused to impersonate an LTE network, the keys have to be bound to the access technology in a secure and backward compatible manner. It is therefore an object of the invention to provide an authentication mechanism which can achieve such a backward compatible binding of the keying materials to the network ID.

WO 2008/046915 A1 discloses a key generating method for protection in next generation mobile network. A key is generated based on a challenge, where in case the network is a LTE, a modified challenge is used and where the network is a 2G/3G communication system, an unmodified challenge is used.

A more detailed description of the key generation in a LTE system is disclosed in "3rd Generation Partnership Project; Technical Specification Group Services and System Aspects; Rationale and Evolved (LTE) RAN / 3GPP System Architecture Evolution (SAE) (Release 8)" 3GPP DRAFT; 33821-200-TR, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Florence; 20090119, 1 March 2009 (2009-03-01), XP050335030.

### SUMMARY OF THE INVENTION

The present invention is defined in the independent claims. The dependant claims define embodiments of the invention.

According to embodiments of the present invention there is provided a mechanism that will allow binding a key to a network access technology in a backward compatible manner.

According to one embodiment there is provided a method for authenticating a mobile device against an authenticator module of a network, said authenticator holding a challenge and a key which has been calculated based on said challenge using some non-invertible function or key derivation function, wherein said key is calculated based on said challenge after it has been modified if the network is a more advanced network and is calculated based on said unmodified challenge if said network is a less advanced network, said authentication method comprising: Forwarding said challenge to said mobile device;
if the network against which said mobile device is to be authenticated is a more advanced network, applying a non-invertible function to said challenge to obtain a modified challenge, and performing key derivation by said mobile device based on said modified challenge, and if the network against which said mobile device is to be authenticated is a less advanced network, performing key derivation by said mobile device based on said unmodified challenge; using the result of said key derivation to execute an authentication protocol from said mobile device to said authenticator, and
authenticating said mobile device by verifying the returned result of said authentication protocol.

By distinguishing the treatment of the challenge, namely by obtaining a modified challenge in case of a more advanced network and using an unmodified one in case of less advanced networks it becomes possible to use two different authentication mechanisms, one for an advanced network and one for a less advanced network and to distinguish between both of them while maintaining backward compatibility. In particular, with this mechanism in a network environment which supports the more advanced authentication still legacy part devices can be used, while enabling the support of the more advanced authentication mechanism.

The challenge used in the method may be a random challenge.

According to one embodiment , if the network against which said mobile device is to be authenticated is a more advanced network, the key to be calculated is bound to a characteristics of said network by said key being further calculated based on a parameter corresponding to the characteristics of said network if the network is a more advanced network and is calculated not based on said parameter if said network is a less advanced network, where said parameter preferably comprises one or more of the following:
the identifier of said network;
a parameter reflecting the type of said network.

With this embodiment there is not only distinguished between the more advanced network and the less advanced network based on whether the challenge is modified or not, but furthermore by whether some parameter reflecting a characteristics of the network is used to derive the key. Such a parameter may for example be the network ID, or any other parameter reflecting a characteristics of the network, like an indication of the network type. If the parameter is used to derive the key, then the key is "bound" to this parameter, and such a binding may by done for the more advanced network and may not be done for the less advanced network. This may take into account a situation where a more advanced network requires e.g. NID key binding (or binding to another parameter) and using an unmodified challenge (without being bound to a NID or network parameter) in case of less advanced networks not requiring such a NID or parameter binding. Thereby it becomes possible to use the legacy mechanisms of authentication protocol execution which, however, lead to different results for different network types due to different challenge values on which the authentication protocol is run. This in turn makes it impossible to use stolen keys from less advanced network types in more advanced network types since this would lead to a mismatch of keys.

This embodiment can adapt to a situation where the more advanced requires a binding of the key to the parameter reflecting the network characteristics, while the less advanced network does not require such a binding.

The parameter to which the calculated key may be bound can be any parameter reflecting the characteristics of the network, such as an identifier of the network, a parameter identifying the network type, the level of security, or anything else which reflects or corresponds to a characteristics of the network.

According to one embodiment the method further comprises:
Calculating by a network authentication server of said network said challenge and said key calculated based on said challenge, and forwarding said challenge and the key calculated based on said challenge to said network authenticator.

In this way a three party authentication scheme can be implemented.

According to one embodiment said calculated key which is based on said challenge and further based on said network ID is obtained based on applying a non-invertible function to a combination of the modified challenge and said network ID.

In this way it becomes possible to include network ID information into the calculated key as requested by the more advanced network system in order to improve security.

According to one embodiment said modified challenge is obtained by applying a first non-invertible function to said challenge; and said calculated key which is calculated based on said unmodified challenge or said modified challenge, depending on whether the network is more advanced or less advanced, is calculated based on applying a second non-invertible function to a combination of said network identifier and said modified challenge or a value derived therefrom.

In this way the mobile device can be authenticated by authenticating the modified challenge and including the network identified when applying the second non-invertible function. The mechanism becomes even more secure if the second non-invertible function is not just applied to the modified challenge but to a value derived therefrom.

According to one embodiment said value derived from said modified challenge is obtained by applying a third non-invertible function on the modified or unmodified challenge, depending whether said network is a more advanced or a less advanced network.

In this way the mechanism can be even made more secure by introducing the third non-invertible function.

According to one embodiment said calculated key is a key calculated based on K_{NID} = KDF_{NID}((KDF(C'),NID)), with C'=KDF'(C), where
C is said challenge and C' is said modified challenge;
KDF' is a first non-invertible function;
KOF_{NID} is a second non-invertible function; and
KDF is a third non-invertible function.

This is a concrete implementation of how to authenticate and derive a key material for accessing the network by the mobile device.

According to one embodiment said non-invertible functions may be hash functions or key derivation functions, and where said first, second and third non-invertible functions may all be different or all be identical or two of them may be identical and one different.

These are possible implementations of the non-invertible functions mentioned in the embodiments of the invention.

According to one embodiment said modified challenge which is obtained by applying a non-invertible function may be obtained based on a combination of said unmodified challenge and said network identifier.

In this way it becomes possible to include information based on the network ID already into the modified challenge, and therefore it is not necessary to perform later - after the authentication protocol according to the less advanced network based on the challenge has been executed - some further operation to include this NID information.

According to one embodiment said mobile device comprises an updated part and a legacy part, where said legacy part performs an authentication protocol in accordance with said less advanced network, and said method comprising:
receiving said challenge by said updated part and, if the authentication is to be performed against a more advanced network, obtaining said modified challenge and forwarding it to said legacy part of said mobile device;
performing said authentication protocol according to said less advanced network in said legacy part based on the challenge received from said updated part;
returning the result of the authentication protocol to said updated part.

In this way the legacy part can be used to perform the authentication protocol while the updated part may be used to implement the network ID binding. This avoids the need to completely replace the mobile device, but instead the legacy part still can be used further while nevertheless for authentications against the more advanced network the network ID is bound to the derived key.

According to one embodiment said less advanced network is a 3GPP network, said challenge is RAND and said non-invertible function which is to be applied to said challenge to obtain said modified challenge if the authentication is to be performed against said more advanced network is g(RAND), and wherein performing the authentication protocol in said mobile device after having obtained said modified challenge comprises to calculate one or more of the following:
a message authentication code MAC' = f1K(SQN ∥ g(RAND) ∥ AMF) where f1 is a message authentication function;
an expected response XRES' = f2K (g(RAND)) where f2 is a (possibly truncated) message authentication function;
a cipher key CK' = f3K (g(RAND)) where f3 is a key generating function;
an integrity key IK' = f4K (g(RAND)) where f4 is a key generating function;
an anonymity key AK' = f5K (g(RAND)) where f5 is a key generating function or f5 ≡ 0;

In this way a 3GPP system can be updated to adapt to a LTE authentication procedure including network ID binding of the derived key, while still making use of the legacy part of the ME to execute the authentication protocol.

According to one embodiment there is provided an apparatus for authenticating a mobile device against an authenticator module of a network, said authenticator holding a challenge and a key which has been calculated based on said challenge using some non-invertible function or key derivation function, wherein said key is calculated based on said challenge after it has been modified if the network is a more advanced network and is calculated based on said unmodified challenge if said network is a less advanced network, said authentication apparatus comprising: A module for forwarding said challenge to said mobile device;
a module for, if the network against which said mobile device is to be authenticated is a more advanced network, applying a non-invertible function to said challenge to obtain a modified challenge, and performing key derivation by said mobile device based on said modified challenge, and
a module for, if the network against which said mobile device is to be authenticated is a less advanced network, performing key derivation by said mobile device based on said unmodified challenge;
a module for using the result of said key derivation to execute an authentication protocol from said mobile device to said authenticator, and
a module for authenticating said mobile device by verifying the returned result of said authentication protocol.

In this way an authentication apparatus operating according to an embodiment of the invention can be implemented.

According to one embodiment there is provided an authenticator module of a network for authenticating a mobile device against an authenticator module of a network, said authenticator holding a challenge and a key which has been calculated based on said challenge using some non-invertible function or key derivation function, wherein said key is calculated based on said challenge after it has been modified if the network is a more advanced network and is calculated based on said unmodified challenge if said network is a less advanced network, said authenticator module comprising:
A module for forwarding said challenge to said mobile device, said mobile device comprising
   a module for, if the network against which said mobile device is to be authenticated is a more advanced network, applying a non-invertible function to said challenge to obtain a modified challenge, and performing key derivation by said mobile device based on said modified challenge, and
   a module for, if the network against which said mobile device is to be authenticated is a less advanced network, performing key derivation by said mobile device based on said unmodified challenge;
   a module for using the result of said key derivation to execute an authentication protocol from said mobile device to said authenticator, and
   said authenticator module comprising a module for authenticating said mobile device by verifying the returned result of said authentication protocol.

In this way an authentication apparatus operating according to an embodiment of the invention can be implemented.

According to one embodiment there is provided a mobile device for authenticating said mobile device against an authenticator module of a network, said authenticator holding a challenge and a key which has been calculated based on said challenge using some non-invertible function or key derivation function, wherein said key is calculated based on said challenge after it has been modified if the network is a more advanced network and is calculated based on said unmodified challenge if said network is a less advanced network, said mobile device comprising:
A module for receiving said challenge from said authenticator;
   a module for, if the network against which said mobile device is to be authenticated is a more advanced network, applying a non-invertible function to said challenge to obtain a modified challenge, and performing key derivation by said mobile device based on said modified challenge, and
   a module for, if the network against which said mobile device is to be authenticated is a less advanced network, performing key derivation by said mobile device based on said unmodified challenge;
   a module for using the result of said key derivation to execute an authentication protocol from said mobile device to said authenticator
   which then authenticates said mobile device said mobile device by verifying the returned result of said authentication protocol.

In this way a mobile device operating according to an embodiment of the invention can be implemented.

According to one embodiment there is provided an apparatus further comprising:
A module or modules for executing a method according to one of the embodiments of the invention.

According to one embodiment there is provided a computer program comprising computer program code which when being executed on a computer enables said computer to execute a method according according to one of the embodiments of the invention.

### DESCRIPTION OF THE DRAWNGS

Fig. 1 schematically illustrates a three party authentication scheme.
Fig. 2 schematically illustrates a three party authentication scheme with an authentication between authenticator and a supplicant.
Fig. 3 schematically illustrates the problem of key theft.
Fig. 4 schematically illustrates the split of the supplicant into a legacy part and a changeable part.
Fig. 5 schematically illustrates an authentication scheme according to prior art less advanced networks.
Fig. 6 schematically illustrates an authentication scheme according to an embodiment of the invention.

### DETAILED DESCRIPTION

At first some terms which will be used in the following are explained.
A: authenticator
AKA: authenticated key agreement
C: challenge
CP: the easily upgradeable part of the supplicant, in 3GPP case equivalent to ME
K_{F}: key agreed using the basic key agreement procedure
K_{NID}: key agreed which is bound to the network ID
LP: the legacy part of the supplicant, in 3GPP case the USIM
ME: mobile equipment
NAS: network authentication server
NID: network ID
S: supplicant
USIM: UMTS subscriber identity module

According to one embodiment the key derivation function used to create keys for use between A and S from the keying material is changed such that to at least one of the challenge parameters used for key derivation a one-way hash function is applied before the result is passed to the cryptographic protocol which is then executed to perform the authentication. The supplicant according to one embodiment knows if the authentication request comes from a more secure access technology (e.g. signaling which signals the used network technology) and if the challenge parameter comes from such a more secure system (like an LTE system) it applies the one way hash function before passing the challenge value to the cryptographic protocol.

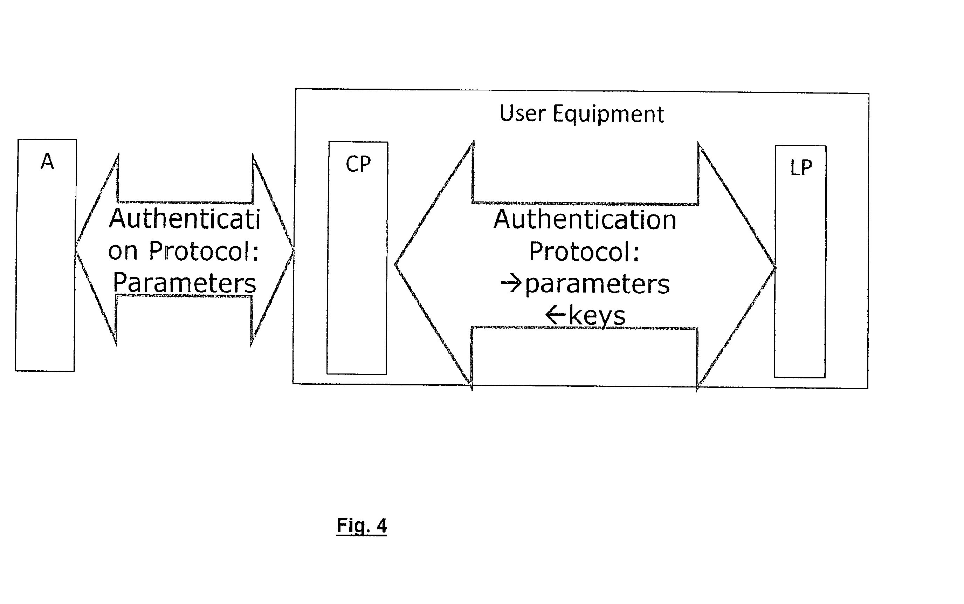

In one embodiment this approach is applicable in cases where the supplicant (the mobile device) has two parts, a legacy part (the USIM or UICC (universal integrated circuit card), H/W), and a changeable part CP (the mobile equipment, S/W) as schematically illustrated by Fig. 4. Typically the long term key is stored in the legacy part and the key derivation also is done in the legacy part. The authentication parameters in such a case according to one embodiment are forwarded to the user equipment where they arrive at the changeable part CP and there a hash function (or a non-invertible function) is applied thereto before passing it to the legacy part LP where the cryptographic protocol for authentication is executed.

In a more concrete embodiment, namely in a 3GPP/AKA environment, such a mechanism involves that the mobile equipment (ME) applies the one way hash function to the random challenge RAND before it is given to the USIM for calculation of all other parameters by executing the authentication protocol. The value included in the authentication vector (and sent to the ME) is the random challenge RAND. If the authentication request comes in via LTE (which is implicitly signaled by the network type), the ME first applies a hash function or any non-invertible function g(.) to the challenge RAND before handing the authentication vector to the USIM. Apart from that the access technology is UMTS and the authentication and key exchange AKA, at least as performed by the legacy part of the ME (the USIM), can be executed unchanged.

Such a solution allows backward compatible realization of the security benefits which network ID binding provides even when not being able to change the fundamental key derivation or changing the function authenticating the network challenge.

The changeable part of the ME can e.g. be changed by updating the software of the mobile equipment, e.g. by a firmware update. Another possibility could be to change the hardware part of the mobile equipment by replacing it, and then use the (old) legacy part USIM with the new hardware. But the more easy way of changing the changeable part CP is to update the software of the mobile device.

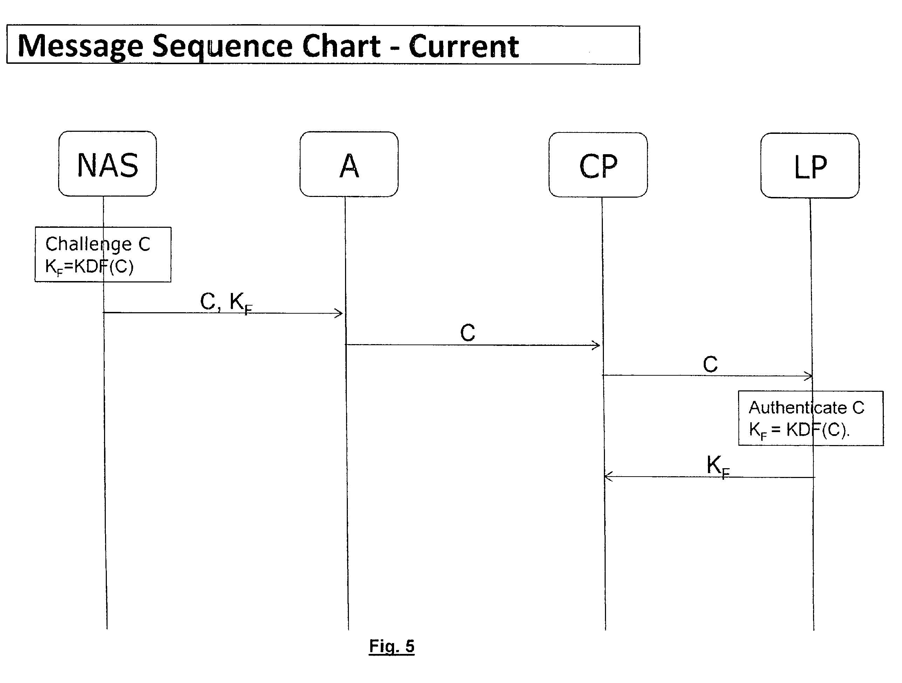

An embodiment of the invention will now be described in somewhat more detail. At first, however, an AKA mechanism according to the prior art without network ID binding in case of 3GPP systems will be described in connection with Fig. 5.

In general, there are three parties involved in the key agreement: network authentication server (NAS), authenticator (A) and supplicant (S). The supplicant here (and in the other embodiments) can be the mobile device which is to be authenticated against the mobile network. The supplicant consists of two parts: an easily changeable part (CP, equivalent to the ME in 3GPP) and a legacy part (LP, equivalent to the USIM in 3GPP) doing the fundamental key derivation (KDF_{F}). In the following the changeable part may also be referred to as an updated part because in one or more embodiments it has been changed so that it is updated and in accordance with the more advanced network (the LTE environment) while the legacy part operated in accordance with the less advanced network (e.g. 3GPP environment).

In legacy systems not doing network ID binding, the key derivation is fundamentally the following:
NAS selects a challenge C, calculates a key K_{F}=KDF(C) by applying some key derivation function KDF, and sends C and K_{F} to A.
A sends the challenge C to the supplicant S (or to the CP part of S), which forwards C to the legacy part LP.

LP then authenticates the challenge and calculates K_{F} = KDF(C). LP sends K_{F} back to CP. Now A and S share a key K_{F}. The authentication is successful if the K_{F} calculated by the LP and the K_{F} sent from the NAS to the authenticator A are identical. It should be noted that the application of the KDF to obtain K_{F} as executed in the legacy part may in the following and in the claims also be referred to as "performing the authentication protocol", which may actually however only be referring to the part of the authentication protocol which is performed in the legacy part.

This is the way how the authentication operates in classical 3GPP systems.

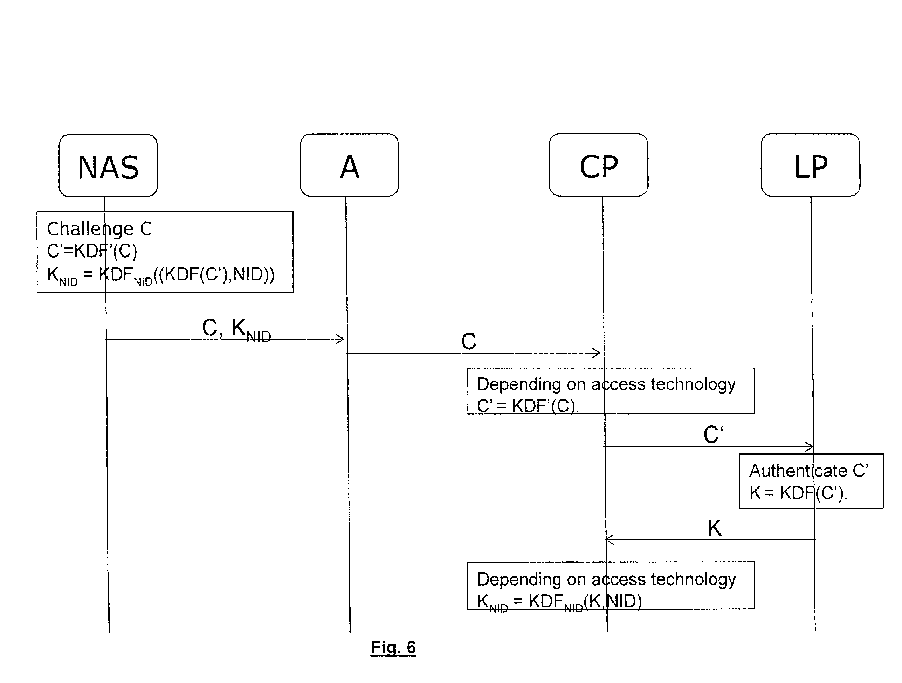

Now there will be explained in connection with Fig. 6 an embodiment which involves network ID binding and is still backward compatible.

To introduce network ID (NID) binding, a possible approach could be that NAS calculates some key K_{NID} = KDF_{NID}(K_{F}, NID) which then would be bound to the network ID NID. The problem with this approach, however, is that anyone who gets hold of K_{F} can calculate K_{NID} for every NID and thus impersonate all networks.

To avoid this problem, according to the proposed embodiment to secure the network binding the following is done in cases in which network binding is required (see Fig. 6):
NAS calculates a key K_{NID} which is bound to the network ID as K_{NID} = KOF_{NID}((KDF(C'),NID)), with C'=KDF'(C). Hereby KDF' is a key derivation function (or hash function, or any non-invertible function) which is applied to the random challenge C. Based on the resulting value C' then the key is obtained by applying some further key derivation function KDF.
K_{NID} is the keying material which is calculated based on network ID binding.
NAS then sends C and K_{NID} to A, and A sends C to S (the CP part of S).

The changeable CP tests if the network access technology requires NID binding. If yes, calculates C' = KDF'(C), otherwise C'=C.
CP forwards C' to LP.
LP authenticates the challenge and calculates K = KDF(C). LP sends K back to CP.
If the network access technology requires NID binding, CP calculates K_{NID} = KDF_{NID}(K,NID) Now A and S share a key K_{NID}.

The proposed solution makes it impossible for a network to successfully share keys with a supplicant in a network access technology that requires NID binding with keys stolen from a network that doesn't perform NID binding.

As an option, KDF' may already include the NID, thus allowing KDF_{NID} to be the identity function, because in such a case the NID is already bound to the modified challenge so that KDF_{NID} needs not to be applied anymore to include the NID information.

For the concrete example of 3GPP AKA which is changed to be adapted to a LTE authentication which includes NID binding, according to one embodiment the following changes apply to the home subscriber server HSS and the mobile equipment ME, i.e. the following values have to be calculated if the authentication is to be performed against a LTE network:
The key derivation functions for EPS (evolved packet system) can be changed such that the ME changes the RAND value before it is given to the USIM for calculation of all other parameters.
The HSS calculates the following values:
   - a message authentication code MAC' = f1K(SQN ∥ g(RAND) ∥ AMF) where f1 is a message authentication function;
   - an expected response XRES' = f2K (g(RAND)) where f2 is a (possibly truncated) message authentication function;
   - a cipher key CK' = f3K (g(RAND)) where f3 is a key generating function;
   - an integrity key IK' = f4K (g(RAND)) where f4 is a key generating function;
   - an anonymity key AK' = f5K (g(RAND)) where f5 is a key generating function or f5 ≡ 0.
Finally the authentication token AUTN = SQN * AK ∥ AMF ∥ MAC is constructed.

In one embodiment the function g(.) may be any non invertible function (e.g. a hash function or key derivation function KDF). Also for the key derivation functions KDF mentioned before it will be understood that any non-invertible function may be used to fulfill their purpose.

The value included in the authentication vector (and sent to MME and ME) is the random challenge RAND. If the authentication request comes in to the ME via an LTE environment, the ME first applies g(.) to RAND before handing the authentication vector to the USIM. Then the authentication protocol is performed on the modified values (modified challenges) as described above, i.e. using g(RAND) instead of RAND. On the other hand, if the authentication request comes in to the ME via an 3GPP environment, then no modified challenge g(RAND) is obtained, and instead the unmodified challenge g(RAND) is forwarded to the USIM and used to perform the authentication protocol as on the conventional manner in the 3GPP system.

It will be understood that instead of g(RAND) there may be calculated g(RAND, NID). ln other words the modified challenge may not only be obtained based on applying the non-invertible function to the RAND but to a combination of the RAND and the NID. In this way the result of the authentication protocol which is returned from the legacy part of the ME to the changeable part CP of the ME already is based on the NID so that no further operation which includes this information is necessary.

In the foregoing there have been described embodiments where the challenge which is forwarded to the mobile device is modified depending on the network access technology. For more advanced networks (like LTE) which require NID binding of the key materials there is carried out a modification, and for less advanced networks which do not require NID binding of the key or keys no modification is performed. The network access technology and thereby information based on which it is decided whether or not to modify the challenge can be signaled implicitly by informing the mobile device about the network type.

With the described embodiments keys without network ID binding cannot be reused in networks with network ID binding because the derived keys will mismatch. If then the network activates the derived keys the communication will become impossible which leads to an implicit authentication.

With the described embodiments a backward compatible implementation of the network ID binding can be achieved which does not require any changes to the legacy part of the supplicant /the mobile device). Instead, the authentication protocol as executed by the less advanced network can still be fully used, and the mechanism which includes the network ID is just added on the top of this legacy authentication mechanism which can then also be executed in legacy hardware elements of the system. In this way a backward compatibility can be obtained and the need for updating the legacy part which performs the (old) authentication protocol becomes obsolete.

In addition to the embodiments described before the following should be noted.
According to one embodiment the mechanism can be implemented independent of an explicit binding of the derived key to a network parameter. In such an embodiment the derived key is either derived based on an modified challenge (in case of the more advanced network) or on the unmodified challenge (in case of the less advanced network). In this way two types of networks and their respective authentication mechanisms can be distinguished, and there is an "implicit" binding of the derived key to a parameter reflecting the network characteristics in the sense that the modified challenge in some sense is a parameter reflecting the network characteristics.

The explicit binding to the parameter reflecting the network characteristics (such as the network ID or any other parameter corresponding to a property or a characteristics of the network) may then be implemented by further calculating the key not only based on the - modified or unmodified - challenge but also based on the parameter. This can be done e.g. by applying a key derivation function to a combination of the parameter and the modified challenge, or by modifying the challenge in a way which incorporates the parameter (e.g. by applying a function to the challenge which uses the parameter as a further input in addition to the challenge) and to then obtain the key based on the thus modified challenge which already "incorporates" or "is bound to" the parameter.

If the parameter is the network ID as described in connection with the embodiments before, then the mechanism can be used in an environment where the authentication is either based on the 3GPP or on the LTE mechanisms, as described before, while maintaining backward compatibility.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computing device or a mobile phone or any mobile device or mobile station or node which is suitably programmed such that it is able to carry out a method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for authenticating a mobile device against an authenticator module of a network, said authenticator (A) holding a challenge and a key which has been calculated based on said challenge using some non-invertible function or key derivation function, wherein said key is calculated based on said challenge after it has been modified if the network is a more advanced network and is calculated based on said unmodified challenge if said network is a less advanced network, said authentication method comprising:
Forwarding said unmodified challenge (C) to said mobile device;
if the network against which said mobile device is to be authenticated is a more advanced network, applying a non-invertible function to said challenge to obtain a modified challenge (C') and performing key derivation by said mobile device based on said modified challenge, and
if the network against which said mobile device is to be authenticated is a less advanced network, performing key derivation by said mobile device based on said unmodified challenge: using the result of said key derivation to execute an authentication protocol from said mobile device to said authenticator, and
authenticating said mobile device by verifying the returned result of said authentication protocol.

2. The method of claim 1, wherein
if the network against which said mobile device is to be authenticated is a more advanced network, then the key to be calculated is bound to a characteristics of said network by said key being
further calculated based on a parameter corresponding to the characteristics of said network, and if said network is a less advanced network, the key is not calculated based on said parameter, wherein said parameter preferably comprises one or more of the following:
the identifier of said network;
a parameter reflecting the type of said network.

3. The method of claim 2, wherein said calculated key which is based on said challenge and further based on said network ID is obtained based on applying a non-invertible function to a combination of the modified challenge and said network ID.

4. The method of one claims 2 or 3, wherein
said modified challenge is obtained by applying a first non-invertible function to said challenge; and
said calculated key which is calculated based on said unmodified challenge or said modified challenge, depending on whether the network is more advanced or less advanced, is calculated based on applying a second non-invertible function to a combination of said modified challenge or a value derived therefrom and said parameter.

5. The method of claim 4, wherein said value derived from said modified challenge is obtained by applying a third non-invertible function on the modified or unmodified challenge, depending whether said network is a more advanced or a less advanced network.

6. The method of one of claims 2 to 5, wherein said calculated key is a key calculated based on K_{NID} = KDF_{NID}((KDF(C'),NID)), with C'=KDF'(C), where
C is said challenge and C' is said modified challenge;
NID is said parameter;
KDF' is a first non-invertible function;
KDF_{NID} is a second non-invertilale function; and
KDF is a third non-invertible function.

7. The method of claim 6, wherein said non-invertible functions may be hash functions or key derivation functions, and
where said first, second and third non-inverlible functions may all be different or all be identical or two of them may be identical and one different.

8. The method of one claims 2 to 7, wherein
said modified challenge which is obtained by applying a non-invertible function may be obtained based on a combination of said unmodified challenge and said parameter.

9. The method of one of the preceding claims, wherein
said mobile device comprises an updated part and a legacy part, where said legacy part performs an authentication protocol in accordance with said less advanced network, and said method comprising:
receiving said challenge by said updated part and, if the authentication is to be performed against a more advanced network, obtaining said modified challenge and forwarding it to said legacy part of said mobile device;
performing said authentication protocol according to said less advanced network in said legacy part based on the challenge received from said updated part;
returning the result of the authentication protocol to said updated part.

10. The method according to one of the preceding claims, wherein said less advanced network is a 3GPP network, said challenge is RAND and said non-invertible function which to be applied to said challenge to obtain said modified challenge if the authentication is to be
performed against said more advanced network is g(RAND), and wherein performing the authentication protocol in said mobile device after having obtained said modified challenge comprises to calculate one or more of the following:
- A message authentication code MAC' = f1 K(SQN ∥ g(RAND) ∥ AMF) where f1 is a message authentication function;
- an expected response XRES' = f2K (g(RAND)) where f2 is a (possibly truncated) message authentication function;
- a cipher key CK' = f3K (g(RAND)) where f3 is a key generating function;
- an integrity key IK' = f4K (g(RAND)) where f4 is a key generating function;
- an anonymity key AK' = f5K (g(RAND)) where f5 is a key generating function or f5 ≡ 0;

11. A mobile device for authenticating said mobile device against an authenticator module of a network, said authenticator (A) holding a challenge and a key which has been calculated based on said challenge using some non-invertible function or key derivation function, wherein said key is calculated based on said challenge after it has been modified if the network is a more advanced network and is calculated based on said unmodified challenge if said network is a less advanced network, said mobile device comprising:
A module for receiving said unmodified challenge (C) from said authenticator;
a module for, if the network against which said mobile device is to be authenticated is a more advanced network, applying a non-invertible function to said challenge to obtain a modified challenge (C'), and performing key derivation by said mobile device based on said modified challenge, and
a module for, if the network against which said mobile device is to be authenticated is a less advanced network, performing key derivation by said mobile device based on said unmodified challenge;
a module for using the result of said key derivation to execute an authentication protocol from said mobile device to said authenticator
which then authenticates said mobile device said mobile device by verifying the returned result of said authentication protocol.

12. The apparatus of claim 11, further comprising:
A module or modules for executing a method according to one of claims 2 to 10.

13. A computer program comprising computer program code which when being executed on a computer enables said computer to execute a method according to one of claims 1 to 10.

## Patentansprüche

1. Ein Verfahren zum Authentifizieren eines mobilen Geräts gegenüber einem Authentikator-Modul eines Netzwerks, wobei der Authentikator (A) eine Challenge und einen Schlüssel hält, der berechnet wurde basierend auf der Challenge unter Verwendung einer nicht-invertierbaren Funktion oder einer Schlüsselableitungsfunktion, wobei der Schlüssel berechnet wird basierend auf der Challenge, nachdem er modifiziert wurde, wenn das Netzwerk ein mehr fortgeschrittenes Netzwerk ist und berechnet wird basierend auf der unmodifizierten Challenge, wenn das Netzwerk ein weniger fortgeschrittenes Netzwerk ist, wobei das Authentifizierungsverfahren aufweist:
Weiterleiten der unmodifizierten Challenge (C) an die mobile Vorrichtung;
falls das Netzwerk, gegenüber dem die mobile Vorrichtung authentifiziert werden soll, ein mehr fortgeschrittenes Netzwerk ist, Anwenden einer nicht-invertierbaren Funktion auf die Challenge, um eine modifizierte Challenge (C') zu erhalten und Durchführen einer Schlüsselableitun durch die mobile Vorrichtung basierend auf der modifizierten Challenge, und
falls das Netzwerk gegenüber dem die mobile Vorrichtung authentifiziert werden soll, ein weniger fortgeschrittenes Netzwerkk ist, Durchführen einer chlüsselableitun durch die mobile Vorrichtung basierend auf der unmodifizierten Challenge;
Verwendung des Ergebnisses der Schlüsselableitung, um ein Authentifizierungsprotokoll von der mobilen Vorrichtung zu dem Authentikator durchzuführen; und
Authentifizieren der mobilen Vorrichtung durch Verifizieren des zurückgegebenen Ergebnisses des Authentifizierungsprotokolls.

2. Das Verfahren nach Anspruch 1, wobei
falls das Netzwerk, gegenüber dem die mobile Vorrichtung authentifiziert werden soll, ein mehr fortgeschrittenes Netzwerk ist, der zu berechnende Schlüssel dann gebunden ist an eine Charakteristik des Netzwerks dadurch, dass der Schlüssel ferner berechnet ist basierend auf einem Parameter, der der Charakteristik des Netzwerks entspricht,
und falls das Netzwerk ein weniger fortgeschrittenes Netzwerk ist, der Schlüssel nicht basierend auf dem Parameter berechnet wird, wobei der Parameter vorzugsweise ein oder mehrere der Folgenden aufweist:
den Identifizierer des Netzwerks;
einen Parameter, der den Typ des Netzwerks reflektiert.

3. Das Verfahren nach Anspruch 2, wobei der berechnete Schlüssel, der auf Challenge und ferner auf der Netzwerk-ID basiert, erhalten wird, basierend auf der Anwendung einer nicht-invertierbaren Funktion auf eine Kombination der modifizierten Challenge und der Netzwerk-ID.

4. Das Verfahren nach einem der Ansprüche 2 oder 3, wobei
die unmodifizierte Challenge erhalten wird durch Anwenden einer ersten nicht-invertierbaren Funktion auf die Challenge; und
der berechnete Schlüssel, der basierend auf der unmodifizierten Challenge oder der modifizierten Challenge berechnet wird, abhängig davon, ob das Netzwerk mehr fortgeschritten oder weniger fortgeschritten ist, berechnet wird, basierend auf Anwendung einer zweiten nicht-invertierbaren Funktion auf einer Kombination der modifizierten Challenge oder einem Wert abgeleitet davon und dem Parameter.

5. Das Verfahren nach Anspruch 4, wobei der von der modifizierten Challenge abgeleitete Wert erhalten wird durch Anwenden einer dritten nicht-invertierbaren Funktion auf die modifizierte oder unmodifizierte Challenge, abhängig davon, ob das Netzwerk ein mehr fortgeschrittenes oder weniger fortgeschrittenes Netzwerk ist.

6. Das Verfahren nach einem der Ansprüche 2 bis 5, wobei der berechnete Schlüssel ein Schlüssel ist, der berechnet wird basierend auf
K_{NID} = KDF_{NID}((KDF(C'),NID)), mit C'=KDF'(C), wobei
C die Challenge ist und C' die modifizierte Challenge ist;
NID der Parameter ist;
KDF' eine erste nicht-invertierbare Funktion ist;
KDF_{NID} eine zweite nicht-invertierbare Funktion ist; und
KDF eine dritte nicht-invertierbare Funktion ist.

7. Das Verfahren nach Anspruch 6, wobei die nicht-invertierbaren Funktionen Hash-Funktionen oder Schlüsselableitungsfunktionen sein können, und wobei die erste, zweite und dritte nicht-invertierbare Funktion alle unterschiedlich oder alle gleich oder zwei von ihnen gleich und eine unterschiedlich sein können.

8. Das Verfahren nach einem der Ansprüche 2 bis 7, wobei die modifizierte Challenge, die erhalten wird durch Anwenden einer nicht-invertierbaren Funktion, erhalten werden kann, basierend auf einer Kombination der unmodifizierten Challenge und dem Parameter.

9. Das Verfahren nach einem der vorhergehenden Ansprüche, wobei die mobile Vorrichtung aufweist einen upgedateten Part und einen Legacy-Part, wobei der Legacy-Part ein Authentifizierungsprotokoll in Übereinstimmung mit dem weniger fortgeschrittenen Netzwerk durchführt, und wobei das Verfahren aufweist:
Empfangen der Challenge durch den upgedateten Part, und falls die Authentifizierung durchgeführt werden soll, gegenüber einem mehr fortgeschrittenen Netzwerk, Erhalten der modifizierten Challenge und Weiterleiten von ihr an den Legacy-Teil der mobilen Vorrichtung;
Durchführen des Authentifizierungsprotokolls gemäß dem weniger fortgeschrittenen Netzwerk in dem Legacy-Teil basierend auf der Challenge, die von dem upgedateten Teile erhalten wurde;
Zurückgeben des Ergebnisses des Authentifizierungsprotokolls an den upgedateten Teil.

10. Das Verfahren gemäß einem der vorhergehenden Ansprüche, wobei das weniger fortgeschrittene Netzwerk ein 3GPP-Netzwerk ist, wobei die Challenge RAND ist und die nicht-invertierbare Funktion, die auf die Challenge angewendet wird, um die modifizierte Challenge zu erhalten, wenn die Authentifizierung in einem mehr fortgeschrittenen Netzwerk durchgeführt werden soll, g(RAND) ist, und wobei die Durchführung des Authentifizierungsprotokolls in der mobilen Vorrichtung nach dem Erhalten der modifizierten Challenge aufweist die Berechnung von einem oder mehreren der Folgenden:
Ein Message-Authentifizierungscode MAC' = f1K(SQN ∥ g(RAND) ∥ AMF) wobei f1 Message-Authentifizierungsfunktion ist;
- eine erwartete Response XRES' = f2K (g(RAND)) wobei f2 eine (möglicherweise trunkierte) Message-Authentifizierungsfunktion ist;
- ein Verschlüsselungsschlüssel CK' = f3K (g(RAND)) wobei f3 eine Schlüsselerzeugungsfunktion ist;
- ein Integritätsschlüssel IK' = f4K (g(RAND)) wobei f4 eine Schlüsselerzeugungsfunktion ist;
- ein Anonymitätsschlüssel AK' = f5K (g(RAND)) wobei f5 eine Schlüsselerzeugungsfunktion oder f5 = 0 ist.

11. Eine mobile Vorrichtung zum Authentifizieren der mobilen Vorrichtung gegenüber einem Authentikator-Modul eines Netzwerks, wobei der Authentikator (A) eine Challenge hält und einen Schlüssel, der berechnet wird basierend auf der Challenge und der Verwendung einer nicht-invertierbaren Funktion oder Schlüsselableitungsfunktion, wobei der Schlüssel berechnet wird basierend auf der Challenge nachdem sie modifiziert wurde, falls das Netzwerk ein mehr fortgeschrittenes Netzwerk ist und berechnet wird basierend auf der unmodifizierten Challenge, falls das Netzwerk ein weniger fortgeschrittenes Netzwerk ist, wobei die mobile Vorrichtung aufweist:
ein Modul zum Weiterleiten der unmodifizierten Challenge (C) an die mobile Vorrichtung;
ein Modul zum, falls das Netzwerk, gegenüber dem die mobile Vorrichtung authentifiziert werden soll, ein mehr fortgeschrittenes Netzwerk ist,
Anwenden einer nicht-invertierbaren Funktion auf die Challenge, um eine modifizierte Challenge (C') zu erhalten und Durchführen einer Schlüsselableitung durch die mobile Vorrichtung basierend auf der modifizierten Challenge, und
ein Modul zum, falls das Netzwerk gegenüber dem die mobile Vorrichtung authentifiziert werden soll, ein weniger fortgeschrittenes Netzwerk ist,
ein Modul zum Durchführen einer Schlüsselableitung durch die mobile Vorrichtung basierend auf der unmodifizierten Challenge;
ein Modul zur Verwendung des Ergebnisses der Schlüsselableitung, um ein Authentifizierungsprotokoll von der mobilen Vorrichtung zu dem Authentikator durchzuführen; und
ein Modul zum Authentifizieren der mobilen Vorrichtung durch Verifizieren des zurückgegebenen Ergebnisses des Authentifizierungsprotokolls.

12. Die Vorrichtung nach Anspruch 11, ferner aufweisend:
ein Modul oder Module zum Ausführen eines Verfahrens gemäß einem der Ansprüche 2 bis 10.

13. Ein Computerprogramm aufweisend Computerprogrammcode, der, wenn er ausgeführt wird, auf einem Computer den Computer in die Lage versetzt, ein Verfahren gemäß einem der Ansprüche 1 bis 10 auszuführen.

## Revendications

1. Procédé d'authentification d'un dispositif mobile auprès d'un module d'authentification d'un réseau, ledit module d'authentification (A) contenant une mise à l'épreuve et une clé qui a été calculée sur la base de ladite mise à l'épreuve en utilisant une certaine fonction non inversible ou fonction de dérivation de clé, dans lequel ladite clé est calculée sur la base de ladite mise à l'épreuve après qu'elle a été modifiée si le réseau est un réseau plus avancé, et est calculée sur la base de ladite mise à l'épreuve non modifiée si ledit réseau est un réseau moins avancé, ledit procédé d'authentification comprenant :
l'acheminement de ladite mise à l'épreuve non modifiée (C) audit dispositif mobile ;
si le réseau auprès duquel ledit dispositif mobile doit être authentifié est un réseau plus avancé, l'application d'une fonction non inversible à ladite mise à l'épreuve en vue d'obtenir une mise à l'épreuve modifiée (C') et la mise en oeuvre d'une dérivation de clé par ledit dispositif mobile sur la base de ladite mise à l'épreuve modifiée ; et
si le réseau auprès duquel ledit dispositif mobile doit être authentifié est un réseau moins avancé, la mise en oeuvre d'une dérivation de clé par ledit dispositif mobile sur la base de ladite mise à l'épreuve non modifiée ;
l'utilisation du résultat de ladite dérivation de clé en vue d'exécuter un protocole d'authentification dudit dispositif mobile audit module d'authentification ; et l'authentification dudit dispositif mobile en vérifiant le résultat renvoyé dudit protocole d'authentification.

2. Procédé selon la revendication 1, dans lequel :
si le réseau auprès duquel ledit dispositif mobile doit être authentifié est un réseau plus avancé, la clé à calculer est liée à une caractéristique dudit réseau en ce que ladite clé est en outre calculée sur la base d'un paramètre correspondant à la caractéristique dudit réseau, et si ledit réseau est un réseau moins avancé, la clé n'est pas calculée sur la base dudit paramètre,
dans lequel ledit paramètre comprend de préférence un ou plusieurs des éléments ci-dessous :
l'identifiant dudit réseau ;
un paramètre qui reflète le type dudit réseau.

3. Procédé selon la revendication 2, dans lequel ladite clé calculée, laquelle est basée sur ladite mise à l'épreuve et est en outre basée sur ledit identifiant de réseau, est obtenue sur la base de l'application d'une fonction non inversible à une combinaison de la mise à l'épreuve modifiée et dudit identifiant de réseau.

4. Procédé selon l'une quelconque des revendications 2 ou 3, dans lequel :
ladite mise à l'épreuve modifiée est obtenue en appliquant une première fonction non inversible à ladite mise à l'épreuve ; et
ladite clé calculée, laquelle est calculée sur la base de ladite mise à l'épreuve non modifiée ou de ladite mise à l'épreuve modifiée, selon que le réseau est plus ou moins avancé, est calculée sur la base de l'application d'une deuxième fonction non inversible à une combinaison de ladite mise à l'épreuve modifiée, ou d'une valeur dérivée de celle-ci, et dudit paramètre.

5. Procédé selon la revendication 4, dans lequel ladite valeur dérivée de ladite mise à l'épreuve modifiée est obtenue en appliquant une troisième fonction non inversible à la mise à l'épreuve modifiée ou à la mise à l'épreuve non modifiée, selon que ledit réseau est un réseau plus avancé ou un réseau moins avancé.

6. Procédé selon l'une quelconque des revendications 2 à 5, dans lequel ladite clé calculée est une clé calculée sur la base de l'équation ci-dessous :
K_{NID} = KDF_{NID} ((KDF(C'), NID)), avec C' = KDF'(C), où
C représente ladite mise à l'épreuve et C' représente ladite mise à l'épreuve modifiée ;
NID représente ledit paramètre ;
KDF' représente une première fonction non inversible ;
KDF_{NID} représente une deuxième fonction non inversable et
KDF représente une troisième fonction non inversible.

7. Procédé selon la revendication 6, dans lequel lesdites fonctions non inversibles peuvent être des fonctions de hachage ou des fonctions de dérivation de clé, et
où lesdites première, deuxième et troisième fonctions non inversibles peuvent être toutes différentes ou toutes identiques, ou deux d'entre elles peuvent être identiques et une être différente.

8. Procédé selon l'une quelconque des revendications 2 à 7, dans lequel :
ladite mise à l'épreuve modifiée qui est obtenue en appliquant une fonction non inversible peut être obtenue sur la base d'une combinaison de ladite mise à l'épreuve non modifiée et dudit paramètre.

9. Procédé selon l'une quelconque des revendications précédentes, dans lequel :
ledit dispositif mobile comprend une partie mise à jour et une partie héritée, où ladite partie héritée met en oeuvre un protocole d'authentification selon ledit réseau moins avancé, et ledit procédé comprend :
la réception de ladite mise à l'épreuve par ladite partie mise à jour et, si l'authentification doit être mise en oeuvre auprès d'un réseau plus avancé,
l'obtention de ladite mise à l'épreuve modifiée et son acheminement à ladite partie héritée dudit dispositif mobile ;
la mise en oeuvre dudit protocole d'authentification selon ledit réseau moines avancé dans ladite partie héritée, sur la base de la mise à l'épreuve reçue à partir de ladite partie mise à jour ;
le renvoi du résultat du protocole d'authentification à ladite partie mise à jour.

10. Procédé selon l'une quelconque des revendications précédentes, dans lequel ledit réseau moins avancé est un réseau 3GPP, ladite mise à l'épreuve est une mise à l'épreuve RAND et ladite fonction non inversible qui doit être appliquée à ladite mise à l'épreuve en vue d'obtenir ladite mise à l'épreuve modifiée si l'authentification doit être exécutée auprès dudit réseau plus avancé est une fonction g(RAND), et dans lequel la mise en oeuvre du protocole d'authentification dans ledit dispositif mobile après avoir obtenu ladite mise à l'épreuve modifiée comprend le calcul d'un ou plusieurs des éléments suivants :
- un message de code d'authentification MAC' = f1K(SQN ∥ g(RAND) ∥ AMF) où f1 est une fonction d'authentification de message ;
- une réponse attendue XRES' = f2K (g(RAND)) où f2 est une fonction d'authentification de message (éventuellement tronquée) ;
- une clé de chiffrement CK' = f3K (g(RAND)) où f3 est une fonction de génération de clé ;
- une clé d'intégrité IK' = f4K (g(RAND)) où f4 est une fonction de génération de clé ;
- une clé d'anonymat AK' = f5K (g(RAND)) où f5 est une fonction de génération de clé, ou f5 = 0.

11. Dispositif mobile pour authentifier ledit dispositif mobile auprès d'un module d'authentification d'un réseau, ledit module d'authentification (A) contenant une mise à l'épreuve et une clé qui a été calculée sur la base de ladite mise à l'épreuve en utilisant une certaine fonction non inversible ou fonction de dérivation de clé, dans lequel ladite clé est calculée sur la base de ladite mise à l'épreuve après qu'elle a été modifiée si le réseau est un réseau plus avancé, et est calculée sur la base de ladite mise à l'épreuve non modifiée si ledit réseau est un réseau moins avancé, ledit dispositif mobile comprenant :
un module pour recevoir ladite mise à l'épreuve non modifiée (C) à partir dudit module d'authentification ;
un module pour, si le réseau auprès duquel ledit dispositif mobile droit être authentifié est un réseau plus avancé, appliquer une fonction non inversible à ladite mise à l'épreuve en vue d'obtenir une mise à l'épreuve modifiée (C') et mettre en oeuvre une dérivation de clé par ledit dispositif mobile sur la base de ladite mise à l'épreuve modifiée ; et
un module pour, si le réseau auprès duquel ledit dispositif mobile doit être authentifié est un réseau moins avancé, mettre en oeuvre une dérivation de clé par ledit dispositif mobile sur la base de ladite mise à l'épreuve non modifiée ;
un module pour utiliser le résultat de ladite dérivation de clé en vue d'exécuter un protocole d'authentification dudit dispositif mobile audit module d'authentification, lequel authentifie ensuite ledit dispositif mobile en vérifiant le résultat renvoyé dudit protocole d'authentification.

12. Dispositif selon la revendication 11, comprenant en outre :
un ou plusieurs modules pour exécuter le procédé selon l'une quelconque des revendications 2 à 10.

13. Programme informatique comprenant un code de programma informatique qui, lorsqu'il est exécuté sur un ordinateur, permet audit ordinateur d'exécuter un procédé selon l'une quelconque des revendications 1 à 10.
